Europäisches Patentamt

**European Patent Office**

Office européen des brevets

(19)

(11) Numéro de publication : **0 032 093**
**B1**

(12)

# FASCICULE DE BREVET EUROPÉEN

(45) Date de publication du fascicule du brevet :
23.05.84

(21) Numéro de dépôt : **80401860.4**

(22) Date de dépôt : **23.12.80**

(51) Int. Cl.³ : **B 21 B 45/02**, F 16 L 25/00//
**B21B33/00**

(54) **Dispositif de refroidissement de produits longs en défilement.**

(30) Priorité : **02.01.80 FR 8000084**

(43) Date de publication de la demande :
**15.07.81 Bulletin 81/28**

(45) Mention de la délivrance du brevet :
**23.05.84 Bulletin 84/21**

(84) Etats contractants désignés :
**AT BE DE GB IT LU NL SE**

(56) Documents cités :
**DE-A- 1 925 416**
**FR-A- 2 309 780**
**FR-A- 2 435 293**
**GB-A- 1 358 316**

(73) Titulaire : **INSTITUT DE RECHERCHES DE LA SIDE-RURGIE FRANCAISE (IRSID) France**
**185, rue Président Roosevelt**
**F-78105 Saint-Germain-en-Laye (FR)**

(72) Inventeur : **Bertolotti, Françis**
**6 bis, avenue des Ecoles**
**F-14460 Colombelles (FR)**
Inventeur : **Braun, Fernand**
**33, rue Sente à My**
**F-57000 Metz (FR)**
Inventeur : **Daverio, Jean-Claude**
**1, rue des Pataljons Ban Saint-Martin**
**F-57000 Metz (FR)**

(74) Mandataire : **Maurette, Hélène et al**
**185, rue Président Roosevelt**
**F-78105 Saint-Germain-en-Laye Cedex (FR)**

Jouve, 18, rue St-Denis, 75001 Paris, France

## Description

La présente invention concerne des dispositifs pour refroidir des produits longs en défilement.

Les dispositifs du genre considéré sont essentiellement constitués d'un tube parcouru par un liquide de refroidissement, généralement de l'eau, et dans lequel passe également un produit long à refroidir.

Le tube est habituellement composé de plusieurs tronçons élémentaires ajoutés les uns aux autres et assemblés entre eux par des brides de fixation. Les deux tronçons terminaux sont respectivement équipés, à leur extrémité libre, d'une tête d'alimentation en eau et d'un séparateur dont le rôle est de sécher le produit à la sortie du tube en le débarassant le plus rapidement possible de sa gaine aqueuse.

Sans être d'application limitée à des domaines industriels particuliers, de tels dispositifs sont mis en œuvre notamment en métallurgie, plus précisément dans le cadre de traitements thermiques spéciaux de produits longs en défilement, tels que des fils ou barres en fin de laminage.

Parmi les problèmes posés, celui de l'extraction du produit consécutif à un blocage accidentel de ce dernier à l'intérieur du tube, appelle en règle générale des mesures longues et pénibles en raison principalement de la difficulté d'accéder au produit à l'intérieur du tube pour le découper, puis l'extraire.

Pour y parvenir on a déjà pensé à remplacer les brides de fixation prémentionnées par des pièces de raccordement reliant les tronçons à distance et comprenant un manchon de maintien formé de deux parties annulaires séparables (brevet allemand DE-A n° 1.925.416). Dans d'autres domaines techniques, par exemple celui des canalisations souterraines (brevet anglais GB-A n° 1.358.316), et dans d'autres buts que la possibilité de pouvoir accéder à l'intérieur du tube, on a pensé relier à distance deux tronçons de canalisation par les raccords constitués de deux demi-coquilles assemblées de façon définitive pour former un cylindre, lequel est entamé à distance par un manchon protecteur d'une seule pièce assurant l'étanchéité avec le milieu extérieur.

Dans le domaine technique de la présente invention, le but de celle-ci est de faciliter l'accès au produit en des endroits situés normalement à l'intérieur du tube et, par voie de conséquence, de simplifier les opérations de dégagement lors de blocages éventuels.

A cet effet, l'invention a pour objet un dispositif de refroidissement de produits longs en défilement comprenant un tube (1) parcouru par un liquide de refroidissement et dans lequel passe également le produit à refroidir, ledit tube étant constitué de plusieurs tronçons élémentaires successifs (2, 2') dont certains au moins sont reliés entre eux à distance par l'intermédiaire de pièces de raccordement escamotables (3) comprenant un manchon de maintien (6) formé de deux parties annulaires (8, 9) séparables, dispositif caractérisé en ce que lesdites pièces de raccordement sont constituées de deux demi-coquilles (4 et 5) et en ce que les deux parties annulaires (8 et 9) du manchon (6) sont juxtaposées et assemblées entre elles à leur extrémité en vis-à-vis par une bague de serrage (10), leur autre extrémité formant une portée (11, 12) pouvant coulisser sur le tube (1).

Selon une réalisation, les demi-coquilles présentent à leurs extrémités des évidements annulaires intérieurs dans lesquels viennent s'engager en butée les extrémités de tronçons de tube à raccorder.

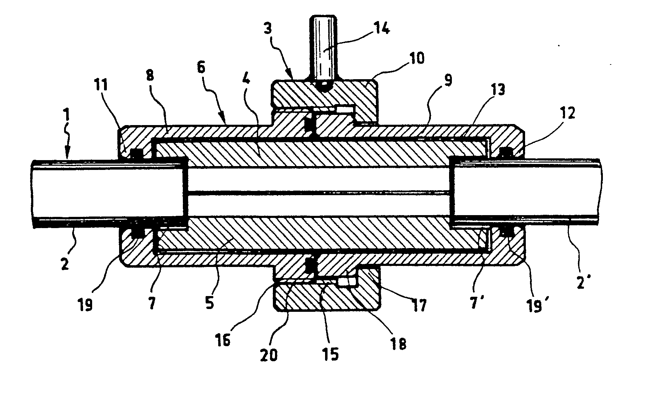

L'invention sera bien comprise au vu de la description qui suit, donnée en référence à la figure unique annexée représentant en coupe longitudinale une pièce de raccordement montée entre deux tronçons consécutifs.

On voit en 1 le tube de refroidissement composé de plusieurs tronçons élémentaires, tels que 2 et 2', reliés entre eux à distance par une pièce de raccordement 3 présentant un diamètre intérieur égal à celui du tube.

Cette pièce est constituée de deux demi-coquilles 4 et 5 et d'un manchon 6.

Comme on le voit, les demi-coquilles sont plus épaisses que le tube et comportant à leurs extrémités des évidements 7 et 7' dans lesquels viennent se loger en butée les extrémités respectives des tronçons de tube 2 et 2'.

Le manchon 6 est réalisé en deux parties annulaires 8 et 9 juxtaposées et assemblées entre elles à l'une de leurs extrémités par une bague de serrage 10, l'autre extrémité formant une portée 11, 12 pouvant coulisser sur le tube 1.

Les demi-coquilles sont maintenues par le manchon 6 en prenant place dans un chambrage 13 prévu à cet effet entre les extrémités 11 et 12.

La mise en place s'effectue de la façon suivante :

On commence par enfiler les parties 8 et 9 du manchon respectivement sur l'un et l'autre des tronçons 2 et 2' à raccorder. On éloigne suffisamment ces deux parties l'une de l'autre en les faisant coulisser sur les tronçons de manière à pouvoir installer les deux demi-coquilles 4 et 5 que l'on maintient serrées temporairement en leur milieu de façon manuelle ou par tout autre moyen approprié. On rapproche les deux parties 8 et 9 de manière à les engager autour de la coquille ; on supprime le serrage temporaire et on achève l'opération de rapprochement jusqu'à mise en contact de leurs extrémités.

On solidarise enfin le tout au moyen de la bague de serrage 10 que l'on actionne en rotation par un bras de manœuvre 14. La bague présente d'un côté un taraudage 15 qui permet de la visser sur un filetage 16 prévu à cet effet sur l'extrémité de la partie 8 du manchon, et de l'autre côté, une butée annulaire 17 qui appuie sur une portée correspondante 18 de la partie 9 du manchon.

L'étanchéité de l'assemblage ainsi réalisé est assurée au moyen de joints toriques en caoutchouc 19 et 19' logés respectivement dans les portées 11 et 12 du manchon et du joint 20, placé à l'interface des parties 8 et 9 du manchon en contact mutuel.

Les opérations de démontage s'effectuent en sens inverse : on commence par désolidariser les deux parties jointives 9 et 8 du manchon en dévissant la bague 10. Puis, on écarte ces deux parties en les faisant coulisser sur leurs tronçons 2 et 2' respectifs. Cet écartement doit être bien entendu suffisant pour libérer les demi-coquilles 4 et 5 que l'on retire ensuite.

L'invention permet ainsi d'accéder localement au produit à l'intérieur du tube. On peut alors, en cas de blocage accidentel, le découper par exemple au chalumeau, pour en faciliter l'extraction. A cet égard, il est avantageux, comme on le comprend bien, de prévoir un écartement entre les tronçons 2 et 2' d'une dizaine de centimètres environ. Compte tenu de la profondeur de pénétration des extrémités de ces tronçons dans les évidements 7 et 7', de quelques centimètres, on détermine une longueur « hors tout » de la pièce de raccordement 3 de 15 à 20 cm environ.

La pièce de raccordement conforme à l'invention est simple technologiquement, donc facile à réaliser, peu coûteuse, peu encombrante, facilement manœuvrable et permet, par rapport aux techniques utilisées habituellement, de réduire très sensiblement le temps d'intervention pour la remise en service de l'installation de refroidissement suite à un blocage accidentel du produit en défilement.

Bien entendu, on peut avantageusement multiplier le nombre de pièces de raccordement selon l'invention le long de l'installation et même, au besoin, en utiliser pour la jonction de tous les tronçons du tube.

## Revendications

1. Dispositif de refroidissement de produits longs en défilement comprenant un tube (1) parcouru par un liquide de refroidissement et dans lequel passe également le produit à refroidir, ledit tube étant constitué de plusieurs tronçons élémentaires successifs (2, 2') dont certains au moins sont reliés entre eux à distance par l'intermédiaire de pièces de raccordement escamotables (3) comprenant un manchon de maintien (6) formé de deux parties annulaires (8, 9) séparables, dispositif caractérisé en ce que lesdites pièces de raccordement sont constituées de deux demi-coquilles (4 et 5) et en ce que les deux parties annulaires (8 et 9) du manchon (6) sont juxtaposées et assemblées entre elles à leur extrémité en vis-à-vis par une bague de serrage (10), leur autre extrémité formant une portée (11, 12) pouvant coulisser sur le tube (1).

2. Dispositif selon la revendication 1, caractérisé en ce que les deux demi-coquilles (4 et 5) présentent à leurs extrémités des évidements annulaires internes (7, 7') dans lesquels viennent s'engager en butée les extrémités des tronçons (2, 2') à raccorder.

3. Dispositif selon la revendication 1, caractérisé en ce que les pièces de raccordement (3) sont dimensionnées de manière à relier les tronçons sur une distance d'une dizaine de centimètres environ.

## Claims

1. A cooling device for lengthwise products in motion, comprising a tube (1) through which flows a cooling liquid and through which also passes the product to be cooled, this tube consisting of several successive elemental sections (2, 2') some of which at least are interconnected at a distance by means of collapsible connecting pieces (3), comprising a retaining sleeve (6), consisting of two separable connecting parts (8, 9), a device characterized in that the said connecting parts consist of two half-shells (4 and 5) and that the two annular parts (8 and 9) of the sleeve (6) are put side-by-side and assembled together at one end vis-à-vis by a retaining ring (10), the other end forming a bearing surface (11, 12), which can slide over the tube (1).

2. A device according to claim 1, characterized in that both half-shells (4 and 5) have at their ends internal annular recesses (7, 7') in which abut the ends of sections (2, 2') to be connected.

3. A device according to claim 1, characterized in that the connection parts (3) are so dimensioned that they connect the sections over a distance of some ten centimetres.

## Ansprüche

1. Vorrichtung für im Durchlaufverfahren zu kühlende längliche Erzeugnisse, bestehend aus einer von einer Kühlflüssigkeit durchströmten Röhre (1), durch die auch das zu kühlende Erzeugnis hindurchgeführt wird und die aus mehreren miteinander fluchtenden Einzelrohren (2, 2') besteht, von denen mindestens einige mittels lösbarer Verbindungsstücke (3) im Abstand voneinander gehalten werden, die eine durch zwei ringförmige, voneinander trennbare Zeile (8, 9) gebildete Manschette (6) aufweisen, dadurch gekennzeichnet, daß die Verbindungsstücke (3) durch zwei Halbschalen (4, 5) gebildet werden und die beiden ringsförmigen Teile (8, 9) der Manschette (6) nebeneinander angeordnet und an ihren einander gegenüberliegenden Enden mittels eines Spannrings (10) miteinander verbunden sind und an ihren äußeren Enden einen auf der Röhre (1) gleitfähigen Lagerring (11, 12) aufweisen.

2. Vorrichtung nach Anspruch 1, dadurch gekennzeichnet, daß die beiden Halbschalen (4, 5) an ihren Enden eine ringförmige Innenaussparung (7, 7') aufweisen, in die die Enden der miteinander zu verbindenden Einzelrohre (2, 2') bis zum Anschlag an die so gebildete Ringschulter eingreifen.

3. Vorrichtung nach Anspruch 1, dadurch gekennzeichnet, daß die Verbindungsstücke (3) so bemessen sind, daß der gegenseitige Abstand der Rohre (2, 2') etwa 10 cm beträgt.